# EUROPÄISCHE PATENTSCHRIFT

(11) **EP 1 053 576 B1**
(45) Veröffentlichungstag und Bekanntmachung des Hinweises auf die Patenterteilung: **29.05.2002**
(21) Anmeldenummer: 99910128.0
(22) Anmeldetag: 11.02.1999
(51) Int. Cl.: H01S 3/02

(54) **VERFAHREN ZUM AUFBAUEN UND VERBINDEN VON OPTISCHEN KOMPONENTEN, INSBESONDERE VON OPTISCHEN KOMPONENTEN IN EINEM LASERRESONATOR UND LASERRESONATOR**
METHOD FOR CONSTRUCTING AND CONNECTING OPTICAL COMPONENTS, ESPECIALLY OPTICAL COMPONENTS IN A LASER RESONATOR, AND A LASER RESONATOR
PROCEDE POUR CONSTITUER ET ASSEMBLER DES COMPOSANTS OPTIQUES, NOTAMMENT LES COMPOSANTS OPTIQUES D'UN RESONATEUR LASER ET RESONATEUR LASER CORRESPONDANT

(30) Priorität: 13.02.1998 DE 19805849
(43) Veröffentlichungstag der Anmeldung: 22.11.2000
(73) Patentinhaber: EADS Deutschland GmbH, 81663 München (DE)
(72) Erfinder: DUDEL, Joachim, D-89134 Blaustein (DE); MEHNERT, Axel, D-81377 München (DE); HALLDORSSON, Thorsteinn, D-81927 München (DE)
(86) Internationale Anmeldenummer: DE9900384
(87) Internationale Veröffentlichungsnummer: WO9941813

(56) Entgegenhaltungen:
- EP-A- 0 251 718
- WO-A-93/10581
- DE-A- 3 836 287
- US-A- 4 653 063
- US-A- 5 673 350
- PATENT ABSTRACTS OF JAPAN vol. 014, no. 441 (E-0981), 20. September 1990 & JP 02 174279 A (ASAHI GLASS CO LTD), 5. Juli 1990
- PATENT ABSTRACTS OF JAPAN vol. 017, no. 649 (E-1468), 2. Dezember 1993 & JP 05 211360 A (NEC CORP), 20. August 1993

## Beschreibung

Die Erfindung bezieht sich auf ein Verfahren zum Aufbauen und Verbinden von optischen Komponenten, insbesondere von optischen Komponenten in einem Laserresonantor, und einen bei diesem Verfahren verwendeten Laserresonator.

Durch den Stand der Technik sind zahlreiche Ausführungsformen von Laserresonatoren bekannt, die vorwiegend mit feinwerktechnisch hergestellten Strukturteilen hergestellt sind. Hierbei werden für die einzelnen Funktionselemente des Laserresonators in aller Regel Justiereinheiten für mindestens vier Achsen verwendet. Dabei stehen zwei Achsen senkrecht zur in der Z-Achse liegenden Resonatorachse und erlauben eine Verschiebung des Funktionselementes. Weiterhin müssen zwei Kippachsen zu dieser Z-Achse realisiert werden. Die einzelnen Justageachsen müssen nun unabhängig voneinander sein und werden aufgrund der erforderlichen genauen Justierung, wobei der Winkel < 1 mrad sein muß, mit Feingewindeschrauben bewegt. Zur Erzeugung von Rückstellkräften verwendet man vornehmlich unterschiedlich gestaltete Federn.

Aus der DE 38 36 287 der Anmelderin ist ein Ausführungsbeispiel eines Lasers nach dem Stand der Technik bekannt, dessen Laserresonator ein zylindrisches Metallrohr ist, in dem rotationssymmetrisch die Resonatorkomponenten unmittelbar mittels Lager- und Führungskomponenten verschiebbar angeordnet und mittels Justierschrauben ein- und feststellbar sind.

Ein ähnliches Ausführungsbeispiel offenbart die EP 0 251 718 A2 am Beispiel eines optisch gepumpten Lasers, bei dem die einzelnen Komponenten mit einem bestimmten Abstand in einer Transportstruktur angeordnet sind.

Solche Laserkonzeptionen weisen eine Reihe von Nachteilen auf, insbesondere sind die Aufwände an Herstellung, Gewicht und Baugröße viel zu hoch. So ist es beispielsweise erforderlich, daß nur Feingewinde eingesetzt werden, die gehärtete Inletts als Auflageflächen erfordern, Verankerungen für die Rückstellfedern benötigen und feinbearbeitete Auflageflächen für die - die Kippachsen definierenden - Kugeln erfordern. Ein weiterer großer Nachteil ist, daß eine Automatisierbarkeit der Laserjustage und Laserherstellung nicht möglich ist. Die Justierung derartiger Laserresonatoren ist bis jetzt immer nur von Hand durchführbar. Auch die Baugröße läßt sich nicht beliebig verkleinern, da das Laserkopfvolumen zwangsläufig bei diesen Konzeptionen in allen Raumrichtungen nicht oder nur ganz unbedeutend minimierbar ist.

Wesentlich aber fallen bei den vorbeschriebenen Konzeptionen des Standes der Technik die negativen Einflüsse von Umweltbedingungen und das systemeigene thermische Verhalten ins Gewicht. Die Strukturteile der Laserresonatoren unterliegen immer wechselnden Umweltbedingungen, insbesondere wenn sie das Subsystem eines "Consumer-Produktes" sind - wie beispielsweise bei Transport und Lagerung - und somit die geordneten Verhältnisse eines Laserlabors verlassen. Hinzu kommen mechanische Belastungen wie Rütteln und Stoßen. Die Justierelemente, wie sie oben genannt sind, sind denkbar schlecht geeignet, um all diesen Belastungen zu widerstehen. Dies liegt zum einen daran, daß sehr viel Material verwendet werden muß, um bei solchen Justiereinrichtungen eine vollkommene Entkopplung der Justageebenen herzustellen.

Temperaturwechsel können deshalb wegen der thermischen Ausdehnungskoeffizienten zu großen Dejustierungen führen. Zum andern können bei Stößen auf derartige Strukturen die Haftreibungskräfte zwischen den Komponenten überwunden werden. Danach "gleitet" die betroffene Justageebene in eine neue Position und verbleibt dort. Die Rückstellkräfte und -richtungen der Federn sind nicht in der Lage, den ursprünglichen Zustand wiederherzustellen. Der Resonator muß also von Hand nachjustiert werden.

Bezüglich des thermischen Verhaltens der Ausführungsbeispiele nach dem Stand der Technik ist noch anzuführen, daß bekanntlich ein Laserresonator die eingekoppelte Primärleistung (beispielsweise die optische Leistung) nur zu einem Teil in Nutzstrahlung umsetzt. Je nach Laserkonzeption sind dies zwischen 10 % und 50 %. Ein Großteil davon muß über Wärmeleitung aus den Funktionselementen des Resonators abgeführt werden, da sonst eine Überhitzung und damit eine teilweise Zerstörung der Elemente hervorgerufen wird. Mit der Verwendung der vorstehend angeführten Justierungselemente ist aber eine Wärmeabfuhr über die Strukturteile mit hohen Temperatursprüngen verbunden, da die einzelnen Justageebenen nur über punktförmige Auflageflächen verbunden sind und somit sehr hohe thermische Widerstände auftreten. Natürlich hängt davon auch das thermische Einschwingverhalten im Einschaltvorgang ab, das aufgrund der hohen thermischen Widerstände hohe Zeitkonstanten aufweist. Bei hohen Stabilitätsanforderungen an den Resonator können diese Zeitkonstanten dann sogar im Bereich einiger Minuten liegen.

Zum Aufbau von optischen Funktionsgruppen, insbesondere von Laserresonatoren werden moderne Verbindungstechniken wie Löt- und Klebeverfahren verwendet. Dabei werden die optischen Bauteile in engem Kontakt zu Haltestrukturen justiert, Klebstoffe oder Lote vor und nach dem Justieren in den entstehenden Spalt eingebracht und daraufhin der meist thermisch induzierte Verbindungsprozess durchgeführt.

Der Vorteil dieser Technik ist der verminderte Aufwand an mechanischen Stellelementen, der bessere thermische Kontakt zu den Halteteilen und die höhere Stabilität der Verbindung. Der große Nachteil dieser Verbindungstechnologie ist jedoch die Dejustage der Elemente beim Harteprozess. Diese Nachteile können ausgeglichen werden, indem zum Beispiel beim Löten ein entsprechender Härteverzug vorgehalten wird. Dieses Verfahren ist jedoch in der Produktion sehr aufwendig und nur schlecht automatisierbar.

Bei Klebstoffen können z.B. langsam aushärtende Epoxidharze verwendet werden, wobei auftretende Dejustagen während der meist stundenlangen Aushärtezeit kontinuierlich ausgeglichen werden. Dieser Prozeß ist zwar automatisierbar, die Herstellung eines Resonantors blockiert jedoch über Stunden die gesamte Fertigungsanlage.

Der vorliegenden Erfindung liegt nun die Aufgabe zugrunde, diese Nachteile des Standes der Technik weitgehend zu beseitigen und einen Laserresonator der eingangs genannten Art zu schaffen, der frei von Dejustierungen durch thermische und umweltbedingte Einflüsse ist und auch eine wirtschaftlich optimierte Herstellung gewährleistet.

Diese Aufgabe wird durch die in den Ansprüchen 1 und 12 aufgezeigten Maßnahmen gelöst. In den Unteransprüchen sind Weiterbildungen und Ausgestaltungen der Erfindung angegeben.

Die Erfindung wird nachfolgend anhand der Beschreibung bevorzugter Ausführungsbeispiele in Verbindung mit der Zeichnung näher erläutert.

Es zeigen :
Fig. 1 eine schematische Darstellung eines erfindungsgemäßen Gesamtsystems am Beispiel eines Nd:YAG-Laser-Frequenzverdopplers,
Fig. 2 eine schematische Darstellung des erfindungsgemäßen Kugelplatten-Resonators mit nur kugelförmigen Haltern für die Laserresonatorelemente,
Fig. 3 eine Draufsicht und eine Längsschnittansicht eines Ausführungsbeispiels eines Halteelements für den Laserkristall mit kugeliger Fläche
Fig. 4 eine Draufsicht und eine Längsschnittansicht eines Ausführungsbeispiels eines ersten Kronenelementes,
Fig. 5 eine Längsschnittansicht eines Ausführungsbeispiels eines zweiten Kronenelementes mit einem Halter für das optische Element,
Fig. 6 eine schematische Darstellung eines Ausführungsbeispiels eines erfindungsgemäßen röhrchenförmigen Resonatorträgers,
Fig. 7 eine schematische Darstellung eines Querschnitts eines weiteren erfindungsgemäßen röhrchenförmigen Resonatorträgers und
Fig. 8 ein erfindungsgemäßes "Kugel-Schiene-Konzept" zur Herstellung von justierten optischen Systemen

Erfindungsgemäß werden die bisher erforderlichen, aufwendigen Justierelemente des Standes der Technik durch einfach, serienmäßig herstellbare Strukturteile ersetzt, die einerseits eine einfache optische Bank bilden und andererseits für die optischen Bauteile ein in mehreren Achsen justierbares Gelenk bilden. Als Verbindungsprozess kommen Löt- und Klebetechniken in Frage, insbesondere jedoch das Schweißen mittels Laserstrahlung. Einzelne Strukturteile, insbesondere Teile des Gelenks sind so ausgeführt, daß ein nachträgliches Feinrichten des entstandenen Härteverzugs vor allem mittels Laserfeinrichten möglich ist. Dabei wird im einfachsten Falle ausgenutzt, daß ein Blechstreifen, welcher mittels Laserenergie bestrahlt wird, innere Spannungen erhält, die den Streifen zum Verbiegen bringen. Somit können verbundene optische Bauteile gegeneinander gekippt und verschoben werden.

Ein zielgerichtetes Nachjustieren wird durch den Einsatz einer Bauteillagesensorik möglich, welche die Position und die Kippwinkel vor und nach dem Verbindungsprozeß erkennt. Diese Sensorik kann im einfachsten Fall der Laserstrahl eines Justierlasers (z.B. HeNe-Laser) sein, der auf eine Oberfläche des optischen Bauteils gerichtet ist. Ebenso denkbar sind interferometrische Meßverfahren oder bildverarbeitende Systeme. Weiterhin kann der emittierte Laserstrahl des entstandenen Resonators selbst, nach entsprechender Analyse, zum zielgerichteten Nachjustieren benutzt werden.

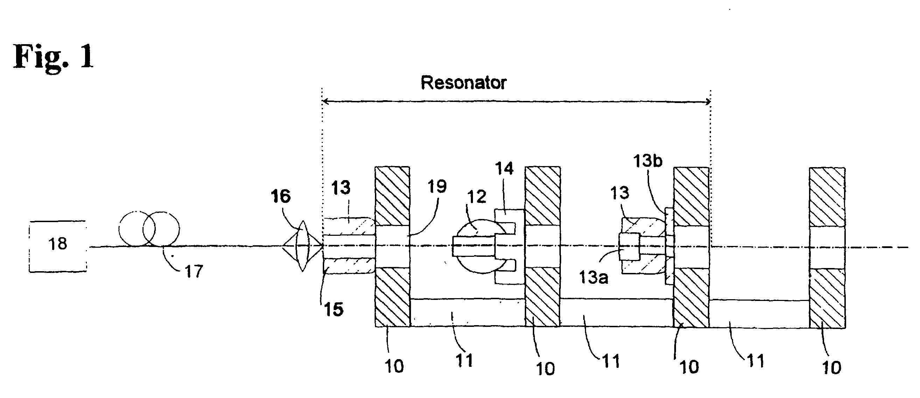

In Fig. 1 ist ein erfindungsgemäßes Gesamtsystem gezeigt.

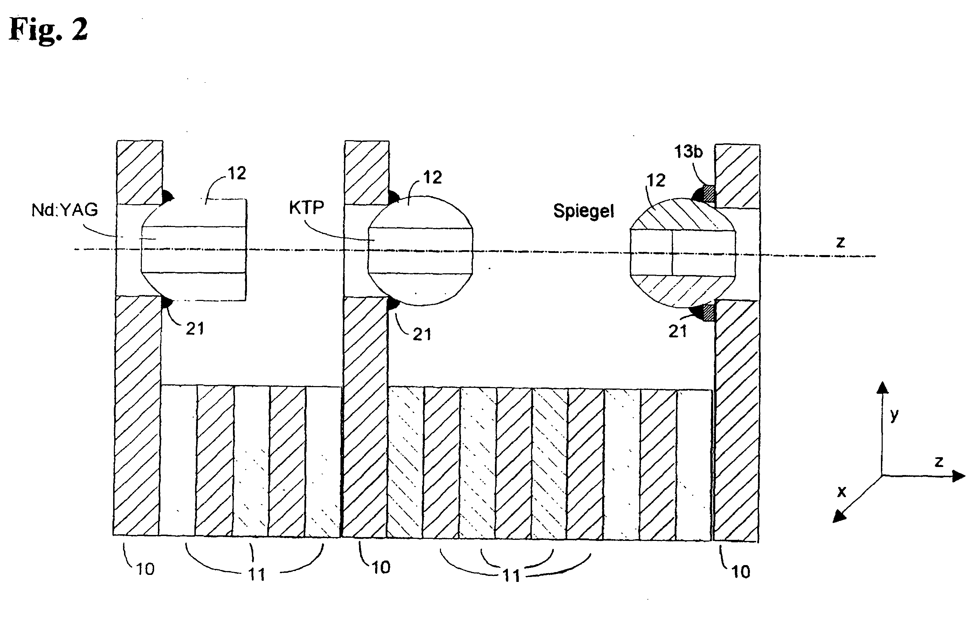

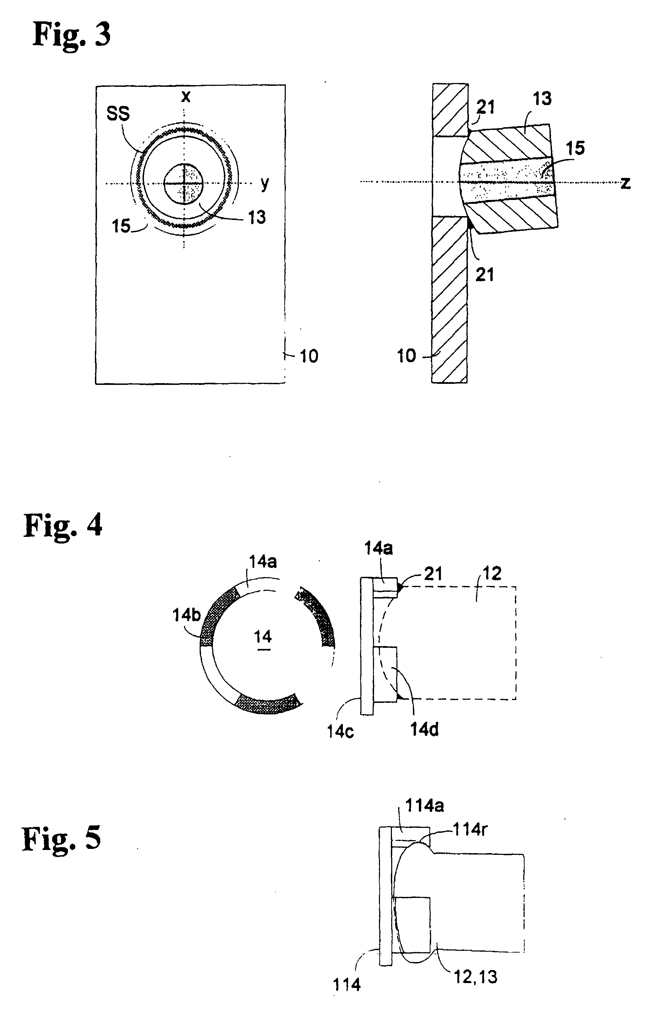

Allgemein wird gemäß der Erfindung vorgeschlagen, die einzelnen optischen Elemente oder Baugruppen, wie Laserkristall 15 oder KTP-Kristall, Resonatorspiegel 13a, etc., in kugelförmigen oder röhrenförmigen Haltern 12, 13 zu integrieren. Fig. 2 zeigt eine schematische Darstellung des erfindungsgemäßen Kugelplatten-Resonators mit nur kugelförmigen Haltern für die Laserresonatorelemente und Fig. 3 eine Draufsicht und eine Längsschnittansicht eines Ausführungsbeispiels eines Halteelements für den Laserkristall mit kugeliger Fläche. Diese Halter 12, 13 werden nun in einem (hier nicht dargestellten) Montagewerkzeug - ähnlich einer optischen Bank - nacheinander miteinander aufgereiht, justiert und gehalten.

Rechteckige, längliche Trägerplatten 10 bestimmter Dicke werden durch sogenannte Basisplatten 11 gehalten, die verschiedene Stärken haben und so jeden definierten Abstand bilden können und zueinander vorgegebene Abstände haben. An den raumfreien Endpartien der Trägerplatten 10 befinden sich in der Laserachse entsprechende Bohrungen 19, in die bzw. an denen die kugelförmigen oder röhrenförmigen Halter 12, 13 angeordnet sind. Wie aus den Figuren 1 bis 3 ersichtlich ist, werden die mit den Laserresonatorelementen versehenen Halter 12, 13 mit ihrer kugeligen bzw. abgerundeten Fläche in die jeweilige Bohrung der zugehörigen Trägerplatte 10 eingesetzt, mit den Justierelementen des Montagewerkzeugs vorjustiert und dann beispielsweise mittels Bestrahlung durch Schweißlaser verbunden. In den Fügespalten entsteht beim Verbindungsprozess beispielsweise die Schweißoder Lötnaht 21. In aller Regel kann auch die Verbindung zwischen den Haltern 12, 13 und ihren Trägerplatten 10, aber auch von den Trägerplatten 10 zu den Basisplatten 11 durch Klebung, Lötung oder einem Laser-Schweißverfahren hergestellt werden.

In dem Ausführungsbeispiel nach Fig. 1 wird der KTP- oder YAG-Kristall an einem sogenannten "Kronenelement" 14 (Fig. 4) befestigt, das eine ringförmige Aufnahme bildet, die einerseits mit Zacken bzw. Stegen 14a zur Laserjustage und Schweiß- oder Lötebenen 14c, 14d zur Trägerplatte 10 sowie dem kugelförmigen Halter 12 versehen ist. Hierbei bilden die Oberflächen der Zacken bzw. Stege 14a die Schweiß- oder Lötebenen 14c - im dargestellten Ausführungsbeispiel sind es drei- für den kugelförmigen Halter 12. Die "Lücken" zwischen den Zacken 14a sind mit 14b bezeichnet. Die Vorjustage der einzelnen Resonatorelemente erfolgt - wie bereits erwähnt - durch das nicht dargestellte Montagewerkzeug. Die Nachjustage in X- und Y-Richtung aber nach dem Laserschweiß-, Löt- oder Klebevorgang erfolgt mittels entsprechender Laserlichtbestrahlung auf eine oder mehrere der Zacken 14a des Kronenelementes 14. Durch die zeitlich entsprechende Bestrahlung erfährt die jeweilige Zacke eine bestimmte Biegung, die zur genauen Endjustage ausgenützt wird. Wie die Praxis am Beispiel einer Nachjustage mittels Nd:YAG-Laserlichts zeigte, lässt sich so eine Nachjustage nicht nur sehr genau, sondern auch sehr schnell durchführen. Die z-Achse bedarf in aller Regel keiner genauen Justage.

In einem weiteren Ausführungsbeispiel wird der kugelförmige Halter 12 oder 13 mit dem Laserresonator-Element von einem "Schnappkronenelement" aufgenommen, wie es in Figur 5 skizziert ist. Hierbei sind an den Innenseiten dieser Zacken 114a des Kronenelementes 114 Radien eingeschliffen, die denjenigen der kugelförmigen Halter 12 oder den Haltern mit einer kugeligen Fläche 13 entsprechen. Wie die Praxis zeigt, ist es nun kein Problem, diese Halter 12, 13 zwischen den sich beim Einschieben leicht spreizenden Zacken bzw. Stegen 114a zu positionieren. Dadurch wird erreicht, dass kein Druck zum Anpressen des Halters 12, 13 mehr erforderlich ist.

Nun kann es bei verschiedenen Ausführungsformen wünschenswert sein, dass der Halter lediglich in eine mit entsprechender Bohrung versehene Scheibe 13b eingesetzt und verschweißt oder verlötet werden soll. In dem Montageelement ist es nun durch Verschieben dieser Scheibe über der Bohrung der Trägerplatte 10 nach oben und unten bzw. seitlich problemlos möglich, die Kongruenz mit der Laserstrahlachse zu erreichen. Da solche Verschiebungen nur relativ geringe Wegstrecken erfordern, können diese während der Trocknungszeit der Klebeverbindung erfolgen.

Die Träger- und Basisplatten 10, 1 sind problemlos mit Kühlkanälen für Fluidsysteme zu versehen, sind aber ebenso problemlos mit Peltierelementen koppelbar.

Durch die vorbeschriebenen Maßnahmen ist nun der problemlose Aufbau eines Festkörperlaser-Resonators, z.B. eines frequenzverdoppelten Nd:YAG-Lasers in einfachster Bauweise offenbart, die den Bau kleiner und leichter Laser erlaubt.

Die Herstellkosten für die einzelnen Bauteile (Platten und Gelenke) sind erheblich gesenkt, da diese Teile nahezu ohne Fertigungstoleranzen auskommen. Durch die sehr kurzen Zeiten beim Verbindungsprozess (Laserschweißen) und dem zielgerichteten (Nach-) Richtprozess des Schweißverzugs sind kürzeste Fertigungszeiten möglich. Das hier beschriebene Aufbau und Verbindungstechnikkonzept für Laser-Resonatoren ist somit ideal geeignet für die Massenproduktion von optischen Systemen, die aus mehreren zu justierenden Elementen bestehen.

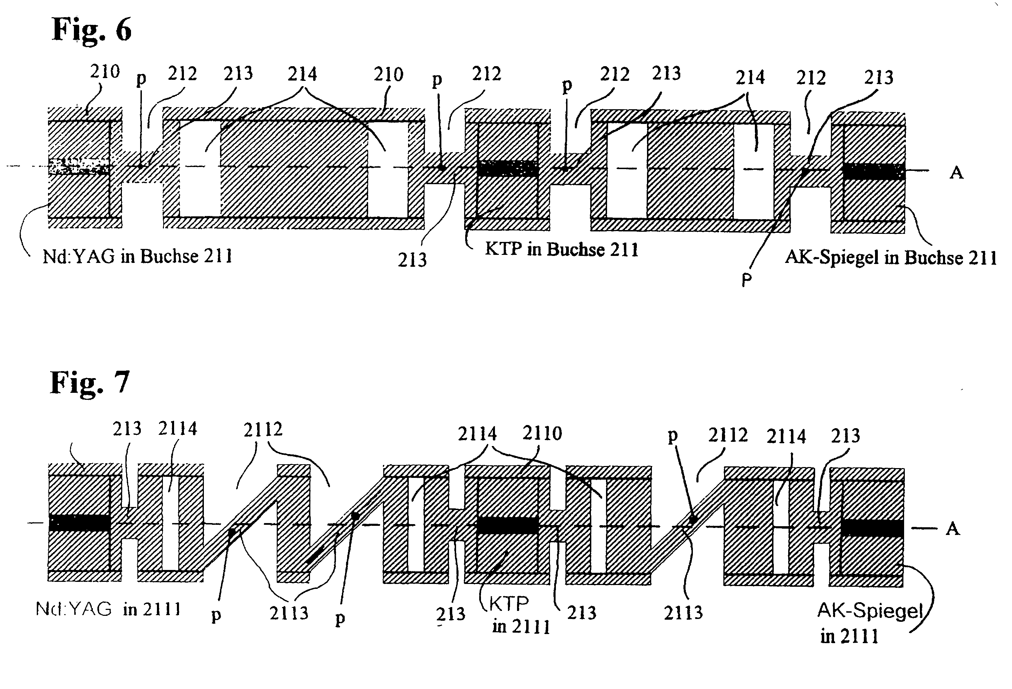

Für die vorbeschriebene Aufbau- und Richttechnik ist im folgenden ein zweites Ausführungsbeispiel beschrieben (Fig. 6).

Das Ausführungsbeispiel gemäß Fig. 6 eignet sich besonders zum Aufbau von optischen Systemen aus Komponenten mit hoher Homogenität und Qualität. Ein Gelenk zur Aufnahme-Justage der Komponenten kann hier entfallen. Die Komponenten werden in Buchsen 211 aufgenommen, in eine Rohrstruktur 210 eingeschoben und abstandsmäßig ausgerichtet, woraufhin die Buchsen 211 mit dem Röhrchen 210 verbunden werden. Die Endjustage der Elemente wird mittels Laserbiegen an den dafür vorgesehenen Stegen 213 durchgeführt. Der ausgesandte Strahl des Laserresonators wird dabei analysiert (z.B. Leistung, Strahlqualität, Rauschen) und dient als Regelgrößen für eine zielgerichtete Endjustage. Für passive optische Systeme (z.B. Linsensysteme) kann ein Regelsignal aus der Abbildung eines Probestrahls oder eines Bilds verwendet werden.

Wie Fig. 6 veranschaulicht, wird ein bestimmt strukturiertes Röhrchen 210 als Träger für die optischen Elemente (hier Elemente eines Laserresonantors) verwendet, wobei diese Elemente in zum Durchmesser des Röhrchens 210 paßgenaue Buchsen 211 integriert sind, die in vorgegebenen Abständen voneinander eingeschoben werden. Dadurch ist eine lagemäßige Ausrichtung der Resonatorelemente vorgegeben, das Röhrchen 210 bildet eine optische Bank. Mittels geeigneter Verbindungstechnik, z.B. Laserschweißen, werden daraufhin die Buchsen 211 mit dem Röhrchen 210 verbunden. Nun weist das Röhrchen 210 sowohl zur Gewichtserleichterung, als auch zur Feinjustage Schlitze 212 und Aussparungen 214 auf, wobei durch die Schlitze 212 bestimmte Stege 213 gebildet werden. Die Justage erfolgt durch die Verbiegung des Röhrchens 210, wobei zur Endjustage eine plastische Verformung erforderlich ist, die zwar mechanisch erfolgen kann, in der Regel aber erfindungsgemäß mittels Laserbestrahlung auf die Stege 213 erfolgt, die in vorgegebener Leistung und Bestrahlungszeit durchgeführt wird. Die veranschaulichte Strukturierung des Röhrchens 210, im vorliegenden Fall die dünnen axialen Stege 213, erleichtern die gewünschten Einknickungen oder Verkippungen durch die Laserpulse. Durch gegengerichtete Biegungen mit einem örtlichen Abstand kann zusätzlich eine xy-Verschiebung erreicht werden.

In Fig. 7 ist eine weitere Bauform eines erfindungsgemäßen röhrchenförmigen Resonatorträgers veranschaulicht, bei dem die Fein- oder Endjustage mittels einer Verwindung des Röhrchens 2110 durchgeführt wird. Hier sind die optischen Resonatorelemente ebenfalls in Buchsen 2111 integriert, die wie vorbeschrieben ausgebildet und im Röhrchen 2110 integriert sind. Auch hier sind Schlitze 2112 und Aussparungen 2114 zur Strukturierung und Gewichtserleichterung des Resonators angeordnet. Hier wird die verwindende plastische Verformung des Resonators durch eine Laserbestrahlung auf die schräg zur Röhrchenachse A verlaufenden Stege 2113 erreicht.

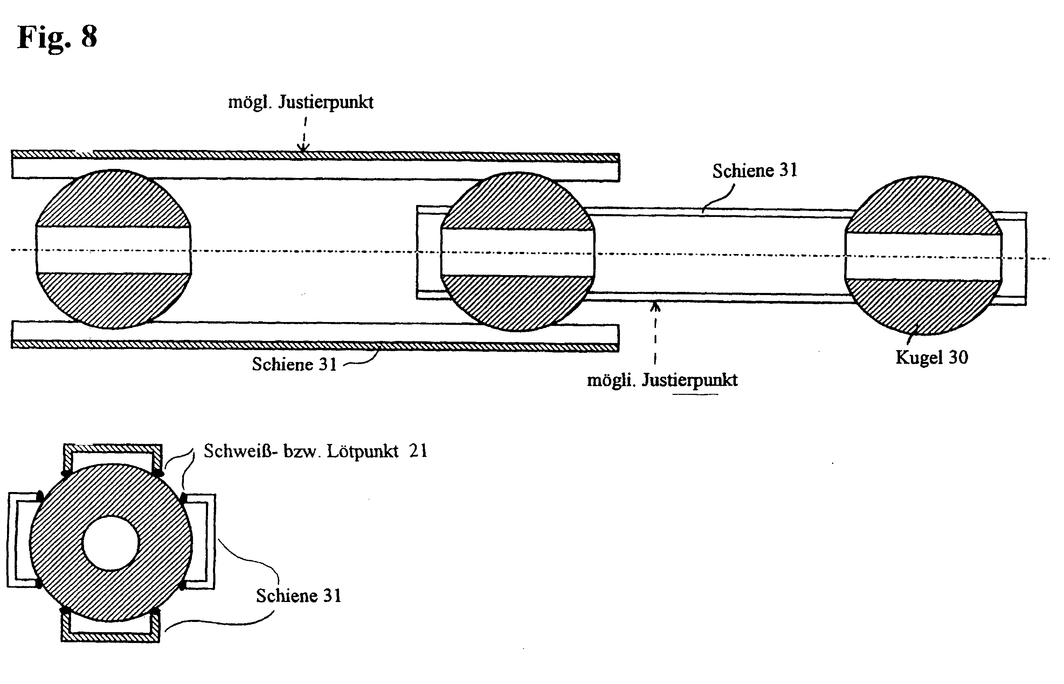

Ein drittes Ausführungsbeispiel ist in Fig. 8 aufgezeigt. Bei dem hier dargestellten erfindungsgemäßen Ausführungsbeispiel sind die einzelnen optischen Elemente z.B. des zu konzipierenden Festkörperlasers in Kügelchen oder Röhrchen integriert, also der Laserkristall, der KTP-Kristall und der Resonatorspiegel. Diese Elemente werden nun mit geeigneten Justiervorrichtungen - beispielsweise XYZ-Tischen, Drehtischen oder Goniometern - beliebig, d.h. entsprechend den vorgegebenen Bedingungen der gewünschten optischen Funktionsgruppe (z.B. des Laserresonators), zueinander ausgerichtet und justiert gehalten. Anschließend werden die Kügelchen 30 oder Röhrchen mit je einer oder mehreren Schienen 31 - am besten U-förmigen Schienen - miteinander verbunden. Hierbei ist mittels zweier gegenüberliegender Schienen bereits eine optimale Stabilität gegeben. Das nächste Kugelelement wird dann mit 90° zum vorgenannten Kugelelement versetzt angeordneten Schienen verbunden.

Die Verbindung zwischen Kugelelement 30 und Schiene 31 kann in üblicher Weise durch Klebung, Lötung oder einem Laserschweiß- bzw. Lötverfahren durchgeführt werden. Dieses "Kugel-Schiene"-Konzept zur Herstellung von justierten optischen Systemen (z.B. Laser-Resonatoren) gewährleistet die serienmäßige Herstellung festjustierter, preiswerter Resonatoren.

Der Ausgleich des Härteverzugs wird wiederum durch Laserrichten erreicht, dafür sind die Schienen 31 entsprechend mit Biegebalken versehen.

Weiterhin kann der Laserresonator in bevorzugter Ausführungsform folgende Merkmale aufweisen:
Die optische Bank 10, 11; 31 kann durch Trägerplatten und Basisplatten und/oder durch U-Schienen gebildet sein.
Die optische Bank 210; 2110 kann durch ein rundes oder eckiges Rohr gebildet sein.
Die optische Bank kann z.B. auch durch aneinandergeschweißte einzelne Gelenke gebildet sein.
Beispielsweise kann jedes Aufnahmeelement 12, 13; 211; 2111; 30 eine Funktionsfläche für das Gelenk aufweisen.
Die Freiheitsgrade der Translation können insbesondere dadurch realisiert sein, daß das Gelenk entlang der Oberfläche der optischen Bank 10, 11 bzw. der Trägerplatte 10 verschiebbar ist.
Der gezielt verbiegbare Teil kann eine Scheibe mit einer Bohrung oder ein rundes oder rechteckiges Rohr oder die Ferule einer Glasfaser sein.
Der gezielt verbiegbare Teil kann z.B. auch verschiedene Aussparungen 14b; 214; 2114 enthalten, die das leichtere und definiertere Verbiegen des Teils erlauben.
Insbesondere können die Bauteile des Gelenks und die optische Bank 10, 11 bzw. die Trägerplatte 10 aneinander mittels Klebe-, Löt- oder Laserschweißtechnik befestigt sein.

## Patentansprüche

1. Verfahren zum Aufbauen und Verbinden von optischen Komponenten, insbesondere in einem Laserresonator, mit den Schritten:
Haltern von optischen Komponenten (13a, 15) in Aufnahmeelementen (12, 13; 30; 211; 2111), die Teile eines Gelenks mit bis zu sechs Freiheitsgraden sind;
Verbinden der Aufnahmeelemente (12, 13; 30; 211; 2111) mit oder zu einer optischen Bank (10, 11; 31; 210; 2110); und
Justieren der optischen Komponenten (13a, 15), so dass sich eine optische Funktion ergibt;
**dadurch gekennzeichnet, dass**
zum Nachjustieren der optischen Komponenten (13a, 15) mit einer Bauteillagesensorik eine Dejustage der optischen Komponenten (13a, 15) ermittelt wird, und mittels Laserfeinrichten durch Bestrahlung von zumindest einem Teil des Gelenks dieser Teil gezielt verbogen wird.

2. Verfahren nach Anspruch 1, **dadurch gekennzeichnet, dass** das Justieren der optischen Komponenten (13a, 15) zueinander mittels externer Montagewerkzeuge erfolgt, wobei die Teile des Gelenks miteinander in mechanischen Kontakt kommen und ein Kontakt zur optischen Bank (10, 11; 31; 210; 2110) entsteht, und dass das Verbinden mittels Klebe-, Löt-oder Schweißtechnik erfolgt.

3. Verfahren nach Anspruch 1 oder 2, **dadurch gekennzeichnet, dass** mit der Bauteillagesensorik vor und nach dem Verbinden die Lage der optischen Komponenten (13a, 15) bestimmt wird und daraus die Dejustage ermittelt wird, wobei durch das Laserfeinrichten die durch den Verbindungsprozess entstandene Dejustage ausgeglichen wird.

4. Verfahren nach einem der Ansprüche 1 bis 3, **dadurch gekennzeichnet, dass** das Verbinden der Aufnahmeelemente (12, 13) durch Schweißen erfolgt.

5. Verfahren nach einem der Ansprüche 1 bis 4, **dadurch gekennzeichnet, dass** beim Schritt des Justierens der mechanische Kontakt zwischen den Bauteilen nach dem Justieren durch Verfahren des Montagewerkzeugs in Richtung der Resonatorachse erfolgt.

6. Verfahren nach einem der Ansprüche 1 bis 5, **dadurch gekennzeichnet, dass** beim Schritt des Justierens für Justagen in der Resonatorachse zwei Teile des Gelenks mittels Federkraft auseinandergedrückt werden und so der mechanische Kontakt zwischen einem Teil des Gelenks und einer Trägerplatte (10) der optischen Bank (10, 11; 210; 2110; 31) hergestellt wird.

7. Verfahren nach einem der Ansprüche 1 bis 5, **dadurch gekennzeichnet, dass** beim Schritt des Justierens der mechanische Kontakt zwischen mindestens zwei Komponenten des Gelenks mittels Gravitationskraft gehalten wird.

8. Verfahren nach einem der Ansprüche 1 bis 5, **dadurch gekennzeichnet, dass** beim Schritt des Justierens der mechanische Kontakt zwischen einer Trägerplatte (10) der optischen Bank (10, 11; 210; 2110; 31) und einer Komponenten des Gelenks mittels Gravitationskraft gehalten wird.

9. Verfahren nach einem der Ansprüche 1 bis 8, **dadurch gekennzeichnet, dass** beim Schritt des Verbindens der Verbindungsprozess zwischen den Bauteilen des Gelenks und einer Trägerplatte (10) der optischen Bank (10, 11; 210; 2110; 31) mittels Laserschweißtechnik erfolgt.

10. Verfahren nach einem der Ansprüche 1 bis 9, **dadurch gekennzeichnet, dass** im Schritt des Ausgleichens der Dejustage mittels Laserfeinrichten dafür vorgesehene Flächen auf Teilen des Gelenks oder des Aufnahmeelements mit Laserlicht bestrahlt werden, die Oberfläche dabei thermisch umgeformt wird und diese Umformung eine Verbiegung der Fläche hervorruft.

11. Verfahren nach einem der Ansprüche 1 bis 10, **gekennzeichnet durch** den Schritt Testen des Biegeverhaltens des gezielt verbiegbaren Teils, wobei die Bauteillagesensorik das Biegeverhalten als Funktion der aufgebrachten Laserenergie und des Ortes vermisst, die so entstehenden, für diesen Teil charakteristischen Translations- und Kippvektoren bestimmt und diese Vektoren nutzt, um ein Bauteil zielgerichtet auf seine Position vor dem Verbindungsprozess zurückzuführen.

12. Laserresonator mit
optischen Komponenten (13a, 15),
Aufnahmeelementen (12, 13; 30; 211; 2111) zur Halterung der optischen Komponenten (13a, 15),
wobei jedes Aufnahmeelement (12, 13; 30; 211; 2111) Teil eines Gelenks mit bis zu sechs Freiheitsgraden ist, und
einer optischen Bank (10, 11; 31; 210; 2110), mit der die Aufnahmeelemente (12, 13; 30; 211; 2111) in Kontakt sind und entlang der die optischen Komponenten (13a, 15) justiert und angeordnet sind,
**dadurch gekennzeichnet, dass**
zur Nachjustierung der optischen Komponenten (13a, 15) ein Teil (13b, 14a; 114a; 213;2113; 31) des Gelenks durch Bestrahlung mit einem Laserstrahl plastisch verformt ist oder Mittel zur Bestrahlung des Teils (13b, 14a; 114a; 213;2113; 31) des Gelenks mit einem Laserstrahl vorgesehen sind.

13. Laserresonator nach Anspruch 12, **gekennzeichnet durch** eine Bauteillagesensorik zur Bestimmung der Lage der optischen Komponenten (13a, 15).

14. Laserresonator nach einem der Ansprüche 12 bis 13, **dadurch gekennzeichnet, dass** das Gelenk bis zu drei Freiheitsgrade der Translation und gleichzeitig bis zu drei Freiheitsgrade der Rotation bereitstellt.

15. Laserresonator nach Anspruch 14, **dadurch gekennzeichnet, dass** die Freiheitsgrade der Rotation mittels einer Kugelfläche des Aufnahmeelements (12, 13) realisiert sind.

16. Laserresonator nach einem der Ansprüche 12 bis 15, **dadurch gekennzeichnet, dass** der gezielt verbiegbare Teil (13b, 14a; 114a; 213; 2113; 31) des Gelenks Bestrahlungsflächen zum Laserrichten aufweist.

17. Laserresonator nach einem der Ansprüche 11 bis 16, **dadurch gekennzeichnet, dass** der verbiegbare Teil (13b, 14a; 214, 2114; 31) aus einem thermisch umformbaren Material, insbesondere aus Stahl, Kupfer oder einem Thermoplast besteht.

## Claims

1. Method for constructing and connecting optical components, especially in a laser resonator, comprising the steps of:
securing optical components (13a, 15) in receiving elements (12, 13; 30; 211; 2111) which are parts of an articulation having up to six degrees of freedom;
connecting the receiving elements (12, 13; 30; 211; 2111) with or to an optical bank (10, 11; 31; 210; 2110); and
adjusting the optical components (13a, 15) so that an optical function results;
**characterised in that**
in order subsequently to adjust the optical components (13a, 15) a loss of adjustment of the optical components (13a, 15) is ascertained using a system for sensing the position of components and, by means of precise alignment obtained by laser irradiation of at least one part of the articulation, that part is bent in a selective manner.

2. Method according to claim 1, **characterised in that** the adjustment of the optical components (13a, 15) relative to one another is effected by external assembly tools, during which operation the parts of the articulation come into mechanical contact with one another and a contact with the optical bank (10, 11; 31; 210; 2110) is formed, and **in that** the connection is effected by adhesive bonding, soldering or welding technology.

3. Method according to claim 1 or 2, **characterised in that** the position of the optical components (13a, 15) is determined before and after connection using the component position sensor system and, from that position, the loss of adjustment is ascertained, the loss of adjustment caused by the connecting process being compensated for by precise laser alignment.

4. Method according to any one of claims 1 to 3, **characterised in that** the connection of the receiving elements (12, 13) is effected by welding.

5. Method according to any one of claims 1 to 4, **characterised in that**, in the adjustment step, the mechanical contact between the components is brought about after adjustment by moving the assembly tool in the direction of the resonator axis.

6. Method according to any one of claims 1 to 5, **characterised in that**, in the adjustment step, for adjustments in the resonator axis, two parts of the articulation are urged apart from one another by resilient force and mechanical contact is thus produced between a part of the articulation and a carrier plate (10) of the optical bank (10, 11; 210; 2110; 31).

7. Method according to any one of claims 1 to 5, **characterised in that**, in the adjustment step, the mechanical contact between at least two components of the articulation is maintained by the force of gravity.

8. Method according to any one of claims 1 to 5, **characterised in that**, in the adjustment step, the mechanical contact between a carrier plate (10) of the optical bank (10, 11; 210; 2110; 31) and a component of the articulation is maintained by the force of gravity.

9. Method according to any one of claims 1 to 8, **characterised in that**, in the connecting step, the connecting process between the components of the articulation and a carrier plate (10) of the optical bank (10, 11; 210; 2110; 31) is effected by laser welding technology.

10. Method according to any one of claims 1 to 9, **characterised in that**, in the step of compensating for loss of adjustment by means of precise laser alignment, areas provided for the purpose on parts of the articulation or of the receiving element are irradiated with laser light and, as that happens, the surface is thermally reshaped and that reshaping causes the area to be bent.

11. Method according to any one of claims 1 to 10, **characterised by** the step of testing the bending behaviour of the part that can be bent in a selective manner, the component position sensor system measuring the bending behaviour as a function of the applied laser energy and of the location, determining the resultant translation and tilting vectors characteristic of that part and using those vectors to return a component in a directed manner to its position before the connecting process.

12. Laser resonator having
optical components (13a, 15),
receiving elements (12, 13; 30; 211; 2111) for securing the optical components (13a, 15),
each receiving element (12, 13; 30; 211; 2111) being part of an articulation having up to six degrees of freedom, and
an optical bank (10, 11; 31; 210; 2110) with which the receiving elements (12, 13; 30; 211; 2111) are in contact and along which the optical components (13a, 15) are adjusted and arranged,
**characterised in that**
in order subsequently to adjust the optical components (13a, 15) a part (13b, 14a; 114a; 213; 2113; 31) of the articulation is plastically deformed by irradiation with a laser beam, or means are provided to irradiate the part (13b, 14a; 114a; 213; 2113; 31) of the articulation with a laser beam.

13. Laser resonator according to claim 12, **characterised by** a component position sensor system for determining the position of the optical components (13a, 15).

14. Laser resonator according to either claim 12 or claim 13, **characterised in that** the articulation provides up to three degrees of freedom of translation and, simultaneously, up to three degrees of freedom of rotation.

15. Laser resonator according to claim 14, **characterised in that** the degrees of freedom of rotation are provided by a spherical face of the receiving element (12, 13).

16. Laser resonator according to any one of claims 12 to 15, **characterised in that** the articulation part (13b, 14a; 114a; 213; 2113; 31) that can be bent in a selective manner has irradiation areas for laser alignment.

17. Laser resonator according to any one of claims 11 to 16, **characterised in that** the bendable part (13b, 14a; 214, 2114; 31) comprises a thermally reshapable material, especially of steel, copper or a thermoplastic.

## Revendications

1. Procédé de montage et d'assemblage de composants optiques, notamment dans une cavité de laser, comportant les étapes suivantes :
logement de composants optiques (13a, 15) dans des éléments de réception (12, 13 ; 30 ; 211 ; 2111) qui sont des parties d'une articulation ayant jusqu'à six degrés de liberté ;
assemblage des éléments de réception (12, 13 ; 30 ; 211 ; 2111) sur ou en un banc optique (10, 11 ; 31 ; 210 ; 2110) ; et
ajustage des composants optiques (13a, 15) de telle sorte qu'il en résulte une fonction optique ;
**caractérisé en ce que**,
pour l'ajustage secondaire des composants optiques (13a, 15), on calcule le désajustement des composants optiques (13a, 15) avec des capteurs de position de composant et on plie de façon contrôlée au moins une partie de l'articulation au moyen de redressages de précision au laser, par illumination de ladite partie.

2. Procédé selon la revendication 1, **caractérisé en ce que** l'ajustage des composants optiques (13a, 15) l'un par rapport à l'autre a lieu au moyen d'outils de montage extérieurs, les parties de l'articulation entrant en contact mécanique les unes avec les autres et un contact se produisant avec le banc optique (10, 11 ; 31 ; 210 ; 2110), et **en ce que** l'assemblage a lieu par collage, brasage ou soudage.

3. Procédé selon la revendication 1 ou 2, **caractérisé en ce que** l'on détermine la position des composants optiques (13a, 15) avant et après l'assemblage au moyen des capteurs de position de composant et **en ce que** cela sert à calculer le désajustement, le désajustement causé par le processus d'assemblage étant compensé par redressage de précision au laser.

4. Procédé selon l'une des revendications 1 à 3, **caractérisé en ce que** l'assemblage des éléments de réception (12, 13) a lieu par soudage.

5. Procédé selon l'une des revendications 1 à 4, **caractérisé en ce que**, lors de l'étape d'ajustage, le contact mécanique entre les composants après l'ajustage a lieu par déplacement de l'outil de montage dans la direction de l'axe de la cavité.

6. Procédé selon l'une des revendications 1 à 5, **caractérisé en ce que**, lors de l'étape d'ajustage, pour des ajustages dans l'axe de la cavité, deux parties de l'articulation sont séparées l'une de l'autre au moyen de la force élastique et qu'ainsi le contact mécanique entre une partie de l'articulation et une plaque-support (10) du banc optique (10, 11 ; 210 ; 2110 ; 31) est établi.

7. Procédé selon l'une des revendications 1 à 5, **caractérisé en ce que**, lors de l'étape d'ajustage, le contact mécanique est maintenu entre au moins deux composants de l'articulation par gravité.

8. Procédé selon l'une des revendications 1 à 5, **caractérisé en ce que**, lors de l'étape d'ajustage, le contact mécanique entre une plaque-support (10) du banc optique (10, 11 ; 210 ; 2110 ; 31) et un composant de l'articulation est maintenu par gravité.

9. Procédé selon l'une des revendications 1 à 8, **caractérisé en ce que**, lors de l'étape d'assemblage, le processus d'assemblage entre les composants de l'articulation et une plaque-support (10) du banc optique (10, 11 ; 210 ; 2110 ; 31) a lieu par soudage au laser.

10. Procédé selon l'une des revendications 1 à 9, **caractérisé en ce que**, au cours de l'étape de compensation du désajustement par redressage de précision au laser, des surfaces prévues à cet effet sur des parties de l'articulation ou de l'élément de réception sont illuminées avec de la lumière laser, la surface étant déformée thermiquement et cette déformation provoquant une pliure de la surface.

11. Procédé selon l'une des revendications 1 à 10, **caractérisé par** l'étape de test de la variation de flexion de la partie pliable de façon contrôlée, étape où les capteurs de position de composant mesurent la variation de flexion en tant que fonction de l'énergie laser appliquée et de l'endroit, déterminent les vecteurs de translation et d'inclinaison caractéristiques de cette partie ainsi obtenus, et utilisent ces vecteurs pour ramener de manière bien précise, avant le processus d'assemblage, un composant dans sa position.

12. Cavité de laser comportant :
des composants optiques (13a, 15),
des éléments de réception (12, 13 ; 30 ; 211 ; 2111) servant de support aux composants optiques (13a, 15),
chaque élément de réception (12, 13 ; 30 ; 211 ; 2111) étant une partie d'une articulation ayant jusqu'à six degrés de liberté, et
un banc optique (10, 11 ; 31 ; 210 ; 2110) avec lequel les éléments de réception (12, 13 ; 5, 30 ; 211 ; 2111) sont en contact et le long duquel les composants optiques (13a, 15) sont ajustés et disposés,
**caractérisée en ce que**,
pour l'ajustage secondaire des composants optiques (13a, 15), on déforme plastiquement, par illumination avec un rayon laser, une partie (13b, 14a ; 114a ; 213 ; 2113 ; 31) de l'articulation ou on prévoit des moyens d'illumination de la partie (13b, 14a ; 114a ; 213 ; 2113 ; 31) de l'articulation avec un rayon laser.

13. Cavité de laser selon la revendication 12, **caractérisée par** des capteurs de position de composant servant à déterminer la position des composants optiques (13a, 15).

14. Cavité de laser selon l'une des revendications 12 à 13, **caractérisée en ce que** l'articulation offre jusqu'à trois degrés de liberté en translation et, en même temps, jusqu'à trois degrés de liberté en rotation.

15. Cavité de laser selon la revendication 14, **caractérisée en ce que** les degrés de liberté en rotation sont réalisés au moyen d'une surface sphérique de l'élément de réception (12, 13).

16. Cavité de laser selon l'une des revendications 12 à 15, **caractérisée en ce que** la partie pouvant être pliée de façon contrôlée (13b, 14a ; 114a ; 213 ; 2113 ; 31) de l'articulation comporte des surfaces d'illumination pour le redressage au laser.

17. Cavité de laser selon l'une des revendications 11 à 16, **caractérisée en ce que** la partie pouvant être pliée (13b, 14a ; 214, 2114 ; 31) est faite d'une matière pouvant être déformée thermiquement, notamment d'acier, de cuivre ou d'une matière thermoplastique.
